# EUROPEAN PATENT SPECIFICATION

(11) **EP 3 330 339 B1**
(45) Date of publication and mention of the grant of the patent: **24.02.2021**
(21) Application number: 17208709.0
(22) Date of filing: 03.03.2006
(51) Int. Cl.: C09K 5/04, C10M 171/00

(54) **COMPOSITIONS COMPRISING HFC-1234ZE**
ZUSAMMENSETZUNGEN MIT HFC-1234ZE
COMPOSITIONS COMPORTANT DU HFC-1234ZE

(30) Priority: 04.03.2005 US 658543 P; 23.08.2005 US 710439 P; 01.11.2005 US 732769 P
(43) Date of publication of application: 06.06.2018
(62) Divisional of application: 08014611.1
(73) Proprietor: The Chemours Company FC, LLC, Wilmington DE 19801 (US)
(72) Inventor: Rao, Velliyur Nott Mallikarjuna, deceased (US); Minor, Barbara Haviland, Elkton, MD Maryland 21921 (US)
(74) Representative: Dannenberger, Oliver Andre

(56) References cited:
- WO-A1-2005/108523
- US-A1- 2004 127 383
- US-A1- 2004 256 594
- DATABASE WPI Week 199221 Thomson Scientific, London, GB; AN 1992-172539 XP002691474, & JP 4 110388 A (DAIKIN KOGYO KK) 10 April 1992 (1992-04-10)

## Description

### CROSS REFERENCE(S) TO RELATED APPLICATION(S)

This application claims the priority benefit of U.S. Provisional Application 60/658,543, filed March 4, 2005, and U.S. Provisional Application 60/710,439, filed August 23, 2005, and U.S. Provisional Application 60/732,769, filed November 1, 2005.

### BACKGROUND OF THE INVENTION

### 1. Field of the Invention.

The present invention relates to compositions for use in refrigeration, air-conditioning, and heat pump systems wherein the composition comprises a fluoroolefin and at least one other component. The compositions of the present invention are useful in processes for producing cooling or heat, and as heat transfer fluids.

### 2. Description of Related Art.

The refrigeration industry has been working for the past few decades to find replacement refrigerants for the ozone depleting chlorofluorocarbons (CFCs) and hydrochlorofluorocarbons (HCFCs) being phased out as a result of the Montreal Protocol. The solution for most refrigerant producers has been the commercialization of hydrofluorocarbon (HFC) refrigerants. The new HFC refrigerants, HFC-134a being the most widely used at this time, have zero ozone depletion potential and thus are not affected by the current regulatory phase out as a result of the Montreal Protocol.

Further environmental regulations may ultimately cause global phase out of certain HFC refrigerants. Currently, the automobile industry is facing regulations relating to global warming potential for refrigerants used in mobile air-conditioning. Therefore, there is a great current need to identify new refrigerants with reduced global warming potential for the mobile air-conditioning market. Should the regulations be more broadly applied in the future, an even greater need will be felt for refrigerants that can be used in all areas of the refrigeration and air-conditioning industry.

Currently proposed replacement refrigerants for HFC-134a include HFC-152a, pure hydrocarbons such as butane or propane, or "natural" refrigerants such as CO₂. Many of these suggested replacements are toxic, flammable, and/or have low energy efficiency. Therefore, new alternative refrigerants are being sought.

US 2004/256594 A1 discloses the use of tetrafluoropropenes in a variety of applications, including refigeration equipment.

The object of the present invention is to provide novel refrigerant compositions and heat transfer fluid compositions that provide unique characteristics to meet the demands of low or zero ozone depletion potential and lower global warming potential as compared to current refrigerants.

### BRIEF SUMMARY OF THE INVENTION

The present invention relates to a composition comprising HFC-1234ze, at least one further compound selected from the group consisting of: HFC-1234yf, HFC-1234ye and HFC-236ea, and a tracer; wherein the tracer is selected from the group consisting of hydrofluorocarbons (HFCs), deuterated hydrocarbons, deuterated hydrofluorocarbons, perfluorocarbons, fluoroethers, brominated compounds, iodated compounds, alcohols, aldehydes, ketones, nitrous oxide (N₂O) and combinations thereof, wherein the tracer or tracer blend is present in the composition at a total concentration of up to 1000 parts per million by weight (ppm).

The present invention further relates to a composition as defined in claims 2 to 6, to a method as defined in claims 7 to 9, and to a refrigeration apparatus, air-conditioning apparatus or heat pump apparatus as defined in claim 10.

### DETAILED DESCRIPTION OF THE INVENTION

The present invention relates to compositions comprising HFC-1234ze, at least one further compound selected from the group consisting of: HFC-1234yf, HFC-1234ye and HFC-236ea, and a tracer; wherein the tracer is selected from the group consisting of hydrofluorocarbons (HFCs), deuterated hydrocarbons, deuterated hydrofluorocarbons, perfluorocarbons, fluoroethers, brominated compounds, iodated compounds, alcohols, aldehydes, ketones, nitrous oxide (N₂O) and combinations thereof, wherein the tracer or tracer blend is present in the composition at a total concentration of up to 1000 parts per million by weight (ppm).

Fluoroolefin compounds and other compounds are listed in Table 1.

**TABLE 1**

| **Compound** | **Chemical name** | **Chemical formula** |
|---|---|---|
| HFC-1225ye | 1,2,3,3,3-pentafluoropropene | CF₃CF=CHF |
| HFC-1234ze | 1,3,3,3-tetrafluoropropene | CF₃CH=CHF |
| HFC-1234yf | 2,3,3,3-tetrafluoropropene | CF₃CF=CH₂ |
| HFC-1234ye | 1,2,3,3-tetrafluoropropene | CHF₂CF=CHF |
| HFC-1243zf | 3,3,3-trifluoropropene | CF₃CH=CH₂ |
| HFC-32 | difluoromethane | CH₂F₂ |
| HFC-125 | pentafluoroethane | CF₃CHF₂ |
| HFC-134 | 1,1,2,2-tetrafluoroethane | CHF₂CHF₂ |
| HFC-134a | 1,1,1,2-tetrafluoroethane | CH₂FCF₃ |
| HFC-143a | 1,1,1-trifluoroethane | CH₃CF₃ |
| HFC-152a | 1,1-difluoroethane | CHF₂CH₃ |
| HFC-161 | fluoroethane | CH₃CH₂F |
| HFC-227ea | 1,1,1,2,3,3,3-heptafluoropropane | CF₃CHFCF₃ |
| HFC-236ea | 1,1,1,2,3,3-hexafluoropropane | CF₃CHFCHF₂ |
| HFC-236fa | 1,1,1,3,3,3-hexafluoroethane | CF₃CH₂CF₃ |
| HFC-245fa | 1,1,1,3,3-pentafluoropropane | CF₃CH₂CHF₂ |
| HFC-365mfc | 1,1,1,3,3-pentafluorobutane | CF₃CH₂CH₂CHF₂ |
| | propane | CH₃CH₂CH₃ |
| | n-butane | CH₃CH₂CH₂CH₃ |
| i-butane | isobutane | CH₃CH(CH₃)CH₃ |
| | 2-methylbutane | CH₃CH(CH₃)CH₂CH₃ |
| | n-pentane | CH₃CH₂CH₂CH₂CH₃ |
| | cyclopentane | cyclo-(CH₂)₅- |
| DME | dimethylether | CH₃OCH₃ |
| CO₂ | carbon dioxide | CO₂ |
| CF₃SCF₃ | bis(trifluoromethyl)sulfide | CF₃SCF₃ |
| | iodotrifluoromethane | CF₃I |

The individual components listed in Table 1 may be prepared by methods known in the art.

The fluoroolefin compounds used in the compositions of the present invention, HFC-1234ze, and HFC-1234ye, may exist as different configurational isomers or stereoisomers. The present invention is intended to include all single configurational isomers, single stereoisomers or any combination or mixture thereof. For instance, 1,3,3,3-tetrafluoropropene (HFC-1234ze) is meant to represent the cis-isomer, transisomer, or any combination or mixture of both isomers in any ratio.

The compositions of the present invention include the following:
HFC-1234ze and at least one compound selected from the group consisting of HFC-1234yf, HFC-1234ye and HFC-236ea.

The compositions of the present invention may be generally useful when the fluoroolefin is present at 1 weight percent to 99 weight percent, preferably 20 weight percent to 99 weight percent, more preferably 40 weight percent to 99 weight percent and still more preferably 50 weight percent to 99 weight percent.

The compositions of the present invention may be azeotropic or near-azeotropic compositions. By azeotropic composition is meant a constant-boiling mixture of two or more substances that behave as a single substance. One way to characterize an azeotropic composition is that the vapor produced by partial evaporation or distillation of the liquid has the same composition as the liquid from which it is evaporated or distilled, i.e., the mixture distills/refluxes without compositional change. Constant-boiling compositions are characterized as azeotropic because they exhibit either a maximum or minimum boiling point, as compared with that of the non-azeotropic mixture of the same compounds. An azeotropic composition will not fractionate within a refrigeration or air conditioning system during operation, which may reduce efficiency of the system. Additionally, an azeotropic composition will not fractionate upon leakage from a refrigeration or air conditioning system. In the situation where one component of a mixture is flammable, fractionation during leakage could lead to a flammable composition either within the system or outside of the system.

A near-azeotropic composition (also commonly referred to as an "azeotrope-like composition") is a substantially constant boiling liquid admixture of two or more substances that behaves essentially as a single substance. One way to characterize a near-azeotropic composition is that the vapor produced by partial evaporation or distillation of the liquid has substantially the same composition as the liquid from which it was evaporated or distilled, that is, the admixture distills/refluxes without substantial composition change. Another way to characterize a near-azeotropic composition is that the bubble point vapor pressure and the dew point vapor pressure of the composition at a particular temperature are substantially the same. Herein, a composition is near-azeotropic if, after 50 weight percent of the composition is removed, such as by evaporation or boiling off, the difference in vapor pressure between the original composition and the composition remaining after 50 weight percent of the original composition has been removed is less than 10 percent.

Azeotropic compositions of the present invention at a specified temperature are shown in Table 2.

**TABLE 2**

| **Component A** | **Component B** | **Wt% A** | **Wt% B** | **Psia** | **kPa** | **T(C)** |
|---|---|---|---|---|---|---|
| cis-HFC-1234ze | HFC-236ea | 20.9 | 79.1 | 30.3 | 209 | 25 |

The near-azeotropic compositions of the present invention at a specified temperature are listed in Table 3.

**TABLE 3**

| **Component A** | **Component B** | **(wt% A/wt% B)** | **T(C)** |
|---|---|---|---|
| HFC-1234yf | trans-HFC-1234ze | 1-99/99-1 | -25 |
| trans-HFC-1234ze | HFC-236ea | 54-99/46-1 | -25 |
| cis-HFC-1234ze | HFC-236ea | 1-99/99-1 | 25 |
| HFC-1234ye | cis-HFC-1234ze | 1-99/99-1 | 25 |

Certain of the compositions of the present invention are non-azeotropic compositions.

A non-azeotropic composition may have certain advantages over azeotropic or near azeotropic mixtures. A non-azeotropic composition is a mixture of two or more substances that behaves as a mixture rather than a single substance. One way to characterize a non-azeotropic composition is that the vapor produced by partial evaporation or distillation of the liquid has a substantially different composition as the liquid from which it was evaporated or distilled, that is, the admixture distills/refluxes with substantial composition change. Another way to characterize a non- azeotropic composition is that the bubble point vapor pressure and the dew point vapor pressure of the composition at a particular temperature are substantially different. Herein, a composition is non-azeotropic if, after 50 weight percent of the composition is removed, such as by evaporation or boiling off, the difference in vapor pressure between the original composition and the composition remaining after 50 weight percent of the original composition has been removed is greater than 10 percent.

The compositions of the present invention may be prepared by any convenient method to combine the desired amounts of the individual components. A preferred method is to weigh the desired component amounts and thereafter combine the components in an appropriate vessel. Agitation may be used, if desired.

An alternative means for making compositions of the present invention may be a method for making a refrigerant blend composition, wherein said refrigerant blend composition comprises a composition as disclosed herein, said method comprising (i) reclaiming a volume of one or more components of a refrigerant composition from at least one refrigerant container, (ii) removing impurities sufficiently to enable reuse of said one or more of the reclaimed components, (iii) and optionally, combining all or part of said reclaimed volume of components with at least one additional refrigerant composition or component.

A refrigerant container may be any container in which is stored a refrigerant blend composition that has been used in a refrigeration apparatus, air-conditioning apparatus or heat pump apparatus. Said refrigerant container may be the refrigeration apparatus, air-conditioning apparatus or heat pump apparatus in which the refrigerant blend was used. Additionally, the refrigerant container may be a storage container for collecting reclaimed refrigerant blend components, including but not limited to pressurized gas cylinders.

Residual refrigerant means any amount of refrigerant blend or refrigerant blend component that may be moved out of the refrigerant container by any method known for transferring refrigerant blends or refrigerant blend components.

Impurities may be any component that is in the refrigerant blend or refrigerant blend component due to its use in a refrigeration apparatus, air-conditioning apparatus or heat pump apparatus. Such impurities include but are not limited to refrigeration lubricants, being those described earlier herein, particulates including but not limited to metal, metal salt or elastomer particles, that may have come out of the refrigeration apparatus, air-conditioning apparatus or heat pump apparatus, and any other contaminants that may adversely effect the performance of the refrigerant blend composition.

Such impurities may be removed sufficiently to allow reuse of the refrigerant blend or refrigerant blend component without adversely effecting the performance or equipment within which the refrigerant blend or refrigerant blend component will be used.

It may be necessary to provide additional refrigerant blend or refrigerant blend component to the residual refrigerant blend or refrigerant blend component in order to produce a composition that meets the specifications required for a given product. For instance, if a refrigerant blend has 3 components in a particular weight percentage range, it may be necessary to add one or more of the components in a given amount in order to restore the composition to within the specification limits.

Compositions of the present invention have zero or low ozone depletion potential and low global warming potential (GWP). Additionally, the compositions of the present invention will have global warming potentials that are less than many hydrofluorocarbon refrigerants currently in use. One aspect of the present invention is to provide a refrigerant with a global warming potential of less than 1000, less than 500, less than 150, less than 100, or less than 50. Another aspect of the present invention is to reduce the net GWP of refrigerant mixtures by adding fluoroolefins to said mixtures.

The compositions of the present invention may be useful as low global warming potential (GWP) replacements for currently used refrigerants, including but not limited to R134a (or HFC-134a, 1,1,1,2-tetrafluoroethane), R22 (or HCFC-22, chlorodifluoromethane), R123 (or HFC-123, 2,2-dichloro-1,1,1-trifluoroethane), R11 (CFC-11, fluorotrichloromethane), R12 (CFC-12, dichlorodifluoromethane), R245fa (or HFC-245fa, 1,1,1,3,3-pentafluoropropane), R114 (or CFC-114, 1,2-dichloro-1,1,2,2-tetrafluoroethane), R236fa (or HFC-236fa, 1,1,1,3,3,3-hexafluoropropane), R124 (or HCFC-124, 2-chloro-1,1,1,2-tetrafluoroethane), R407C (ASHRAE designation for a blend of 52 weight percent R134a, 25 weight percent R125 (pentafluoroethane), and 23 weight percent R32 (difluoromethane), R410A (ASHRAE designation for a blend of 50 weight percent R125 and 50 weight percent R32), R417A, (ASHRAE designation for a blend of 46.6 weight percent R125, 50.0 weight percent R134a, and 3.4 weight percent n-butane), R422A (ASHRAE designation for a blend of 85.1 weight percent R125, 11.5 weight percent R134a, and 3.4 weight percent isobutane), R404A, (ASHRAE designation for a blend of 44 weight percent R125, 52 weight percent R143a (1,1,1-trifluoroethane), and 4.0 weight percent R134a) and R507A (ASHRAE designation for a blend of 50 weight percent R125 and 50 weight percent R143a). Additionally, the compositions of the present invention may be useful as replacements for R12 (CFC-12, dichlorodifluoromethane) or R502 (ASHRAE designation for a blend of 51.2 weight percent CFC-115 (chloropentafluoroethane) and 48.8 weight percent HCFC-22).

Often replacement refrigerants are most useful if capable of being used in the original refrigeration equipment designed for a different refrigerant. The compositions of the present invention may be useful as replacements for the above-mentioned refrigerants in original equipment. Additionally, the compositions of the present invention may be useful as replacements for the above-mentioned refrigerants in equipment designed to use the above-mentioned refrigerants.

The compositions of the present invention further comprise a tracer selected from the group consisting of hydrofluorocarbons (HFCs), deuterated hydrocarbons, deuterated hydrofluorocarbons, perfluorocarbons, fluoroethers, brominated compounds, iodated compounds, alcohols, aldehydes, ketones, nitrous oxide (N₂O) and combinations thereof. The tracer compounds are added to the compositions in previously determined quantities to allow detection of any dilution, contamination or other alteration of the composition, as described in U. S. Patent application serial no. 11/062044, filed February 18, 2005.

Typical tracer compounds for use in the present compositions are listed in Table 4.

**TABLE 4**

| **Compound** | **Structure** |
|---|---|
| **Deuterated hydrocarbons and hydrofluorocarbons** | |
| Ethane-d6 | CD₃CD₃ |
| Propane-d8 | CD₃CD₂CD₃ |
| HFC-32-d2 | CD₂F₂ |
| HFC-134a-d2 | CD₂FCF₃ |
| HFC-143a-d3 | CD₃CF₃ |
| HFC-125-d | CDF₂CF₃ |
| HFC-227ea-d | CF₃CDFCF₃ |
| HFC-227ca-d | CF₃CF₂CDF₂ |
| HFC-134-d2 | CDF₂CDF₂ |
| HFC-236fa-d2 | CF₃CD₂CF₃ |
| HFC-245cb-d3 | CF₃CF₂CD₃ |
| HFC-263fb-d2* | CF₃CD₂CH₃ |
| HFC-263fb-d3 | CF₂CH₂CD₃ |
| **Fluoroethers** | |
| HFOC-125E | CHF₂OCF₃ |
| HFOC-134aE | CH₂FOCF₃ |
| HFOC-143aE | CH₃OCF₃ |
| HFOC-227eaE | CF₃OCHFCF₃ |
| HFOC-236faE | CF₃OCH₂CF₃ |
| HFOC-245faEβγ or HFOC-245faEαβ | CHF₂OCH₂CF₃ (or CHF₂CH₂OCF₃) |
| HFOC-245cbEβγ or HFOC-245cbαβ | CH₃OCF₂CF₃ (or CH₃CF₂OCF₃) |
| HFE-42-11 mcc (or Freon® E1) | CF₃CF₂CF₂OCHFCF₃ |
| Freon® E2 | CF₃CF₂CF₂OCF(CF3)CF₂OCHFCF₃ |

| **Hydrofluorocarbons** | |
|---|---|
| HFC-23 | CHF₃ |
| HFC-161 | CH₃CH₂F |
| HFC-152a | CH₃CHF₂ |
| HFC-134 | CHF₂CHF₂ |
| HFC-227ea | CF₃CHFCF₃ |
| HFC-227ca | CHF₂CF₂CF₃ |
| HFC-236cb | CH₂FCF₂CF₃ |
| HFC-236ea | CF₃CHFCHF₂ |
| HFC-236fa | CF₃CH₂CF₃ |
| HFC-245cb | CF₃CF₂CH₃ |
| HFC-245fa | CHF₂CH₂CF₃ |
| HFC-254cb | CHF₂CF₂CH₃ |
| HFC-254eb | CF₃CHFCH₃ |
| HFC-263fb | CF₃CH₂CH₃ |
| HFC-272ca | CH₃CF₂CH₃ |
| HFC-281 ea | CH₃CHFCH₃ |
| HFC-281 fa | CH₂FCH₂CH₃ |
| HFC-329p | CHF₂CF₂CF₂CF₃ |
| HFC-329mmz | (CH₃)₂CHCF₃ |
| HFC-338mf | CF₃CH₂CF₂CF₃ |
| HFC-338pcc | CHF₂CF₂CF₂CHF₂ |
| HFC-347s | CH₃CF₂CF₂CF₃ |
| HFC-43-10mee | CF₃CHFCHFCF₂CF₃ |

| Perfluorocarbons | |
|---|---|
| PFC-116 | CF₃CF₃ |
| PFC-C216 | Cyclo(-CF₂CF₂CF₂-) |
| PFC-218 | CF₃CF₂CF₃ |
| PFC-C318 | Cyclo(-CF₂CF₂CF₂CF₂-) |
| PFC-31-10mc | CF₃CF₂CF₂CF₃ |
| PFC-31-10my | (CF₃)₂CFCF₃ |
| PFC-C51-12mycm | Cyclo(-CF(CF₃)CF₂CF(CF₃)CF₂-) |
| PFC-C51-12mym, trans | Cyclo(-CF₂CF(CF₃)CF(CF₃CF₂-) |
| PFC-C51-12mym, cis | Cyclo(-CF₂CF(CF₃)CF(CF₃)CF₂-) |
| Perfluoromethylcyclo-pentane | Cyclo(-CF₂CF₂(CF₃)CF₂CF₂CF₂-) |
| Perfluoromethylcyclo-hexane | Cyclo(-CF₂CF₂(CF₃)CF₂CF₂CF₂CF₂-) |
| Perfluorodimethylcyclo-hexane (ortho, meta, or para) | Cyclo(-CF₂CF₂(CF₃)CF₂CF₂(CF₃)CF₂-) |
| Perfluoroethylcyclohexane | Cyclo(-CF₂CF₂(CF₂CF₃)CF₂CF₂CF₂CF₂-) |
| Perfluoroindan | C₉F₁₀ (see structure below) |
| | 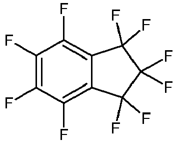 |
| Perfluorotrimethylcyclo-hexane (all possible isomers) | Cyclo(-CF₂(CF₃)CF₂(CF₃)CF₂CF₂(CF₃)CF₂-) |
| Perfluoroisopropylcyclo-hexane | Cyclo(-CF₂CF₂(CF₂(CF₃)₂)CF₂CF₂CF₂CF₂-) |
| Perfluorodecalin (cis or trans, trans shown) | C₁₀F₁₈ (see structure below) |
| | 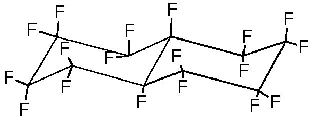 |
| Perfluoromethyldecalin (cis or trans and all additional possible isomers) | C₁₁ F₂₀ (see structure below) |
| | 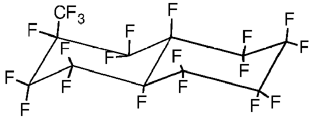 |

| **Brominated compounds** | |
|---|---|
| Bromomethane | CH₃Br |
| Bromofluoromethane | CH₂FBr |
| Bromodifluoromethane | CHF₂Br |
| Dibromofluoromethane | CHFBr₂ |
| Tribromomethane | CHBr₃ |
| Bromoethane | CH₃CH₂Br |
| Bromoethene | CH₂=CHBr |
| 1,2-dibromoethane | CH₂BrCH₂Br |
| 1-bromo-1,2-difluoroethene | CFBr=CHF |

| **Iodated compounds** | |
|---|---|
| lodotrifluoromethane | CF₃I |
| Difluoroiodomethane | CHF₂I |
| Fluoroiodomethane | CH₂FI |
| 1,1,2-trifluoro-1-iodoethane | CF₂ICH₂F |
| 1,1,2,2-tetrafluoro-1-iodoethane | CF₂ICHF₂ |
| 1,1,2,2-tetrafluoro-1,2-diiodoethane | CF₂ICF₂I |
| Iodopentafluorobenzene | C₆F₅I |

| **Alcohols** | |
|---|---|
| Ethanol | CH₃CH₂OH |
| n-propanol | CH₃CH₂CH₂OH |
| Isopropanol | CH₃CH(OH)CH₃ |

| **Aldehydes and Ketones** | |
|---|---|
| Acetone (2-propanone) | CH₃C(O)CH₃ |
| n-propanal | CH₃CH₂CHO |
| n-butanal | CH₃CH₂CH₂CHO |
| Methyl ethyl ketone (2-butanone) | CH₃C(O)CH₂CH₃ |
| **Other** | |
| Nitrous oxide | N₂O |

The compounds listed in Table 4 are available commercially (from chemical supply houses) or may be prepared by processes known in the art.

Single tracer compounds may be used in combination with a refrigeration/heating fluid in the compositions of the present invention or multiple tracer compounds may be combined in any proportion to serve as a tracer blend. The tracer blend may contain multiple tracer compounds from the same class of compounds or multiple tracer compounds from different classes of compounds. For example, a tracer blend may contain 2 or more deuterated hydrofluorocarbons, or one deuterated hydrofluorocarbon in combination with one or more perfluorocarbons.

Additionally, some of the compounds in Table 4 exist as multiple isomers, structural or optical. Single isomers or multiple isomers of the same compound may be used in any proportion to prepare the tracer compound. Further, single or multiple isomers of a given compound may be combined in any proportion with any number of other compounds to serve as a tracer blend.

The tracer compound or tracer blend may be present in the compositions at a total concentration of 50 parts per million by weight (ppm) to 1000 ppm. Preferably, the tracer compound or tracer blend is present at a total concentration of 50 ppm to 500 ppm and most preferably, the tracer compound or tracer blend is present at a total concentration of 100 ppm to 300 ppm.

The present invention further relates to a method for replacing a high GWP refrigerant in a refrigeration, air-conditioning, or heat pump apparatus, wherein said high GWP refrigerant is selected from the group consisting of R134a, R22, R245fa, R114, R236fa, R124, R410A, R407C, R417A, R422A, R507A, and R404A, said method comprising providing a composition of the present invention to said refrigeration, air-conditioning, or heat pump apparatus that uses, used or is designed to use said high GWP refrigerant.

Vapor-compression refrigeration, air-conditioning, or heat pump systems include an evaporator, a compressor, a condenser, and an expansion device. A vapor-compression cycle re-uses refrigerant in multiple steps producing a cooling effect in one step and a heating effect in a different step. The cycle can be described simply as follows. Liquid refrigerant enters an evaporator through an expansion device, and the liquid refrigerant boils in the evaporator at a low temperature to form a gas and produce cooling. The low-pressure gas enters a compressor where the gas is compressed to raise its pressure and temperature. The higher-pressure (compressed) gaseous refrigerant then enters the condenser in which the refrigerant condenses and discharges its heat to the environment. The refrigerant returns to the expansion device through which the liquid expands from the higher-pressure level in the condenser to the low-pressure level in the evaporator, thus repeating the cycle.

As used herein, mobile refrigeration apparatus or mobile air-conditioning apparatus refers to any refrigeration or air-conditioning apparatus incorporated into a transportation unit for the road, rail, sea or air. In addition, apparatus, which are meant to provide refrigeration or air-conditioning for a system independent of any moving carrier, known as "intermodal" systems, are included in the present invention. Such intermodal systems include "containers" (combined sea/land transport) as well as "swap bodies" (combined road and rail transport). The present invention is particularly useful for road transport refrigerating or air-conditioning apparatus, such as automobile air-conditioning apparatus or refrigerated road transport equipment.

The present invention further relates to a process for producing cooling comprising evaporating the compositions of the present invention in the vicinity of a body to be cooled, and thereafter condensing said compositions.

The present invention further relates to a process for producing heat comprising condensing the compositions of the present invention in the vicinity of a body to be heated, and thereafter evaporating said compositions.

The present invention further relates to a refrigeration, air-conditioning, or heat pump apparatus containing a composition of the present invention wherein said composition at least one fluoroolefin.

Further described herein is a mobile air-conditioning apparatus containing a composition of the present invention.

Further described herein is a method for early detection of a refrigerant leak in a refrigeration, air-conditioning or heat pump apparatus said method comprising using a non-azeotropic composition in said apparatus, and monitoring for a reduction in cooling performance. The non-azeotropic compositions will fractionate upon leakage from a refrigeration, air-conditioning or heat pump apparatus and the lower boiling (higher vapor pressure) component will leak out of the apparatus first. When this occurs, if the lower boiling component in that composition provides the majority of the refrigeration capacity, there will be a marked reduction in the capacity and thus performance of the apparatus. In an automobile air-conditioning system, as an example, the passengers in the automobile will detect a reduction in the cooling capability of the system. This reduction in cooling capability can be interpreted to mean that refrigerant is being leaked and that the system requires repair.

Further described herein is a method of using the compositions of the present invention as a heat transfer fluid composition, said process comprising transporting said composition from a heat source to a heat sink.

Heat transfer fluids are utilized to transfer, move or remove heat from one space, location, object or body to a different space, location, object or body by radiation, conduction, or convection. A heat transfer fluid may function as a secondary coolant by providing means of transfer for cooling (or heating) from a remote refrigeration (or heating) system. In some systems, the heat transfer fluid may remain in a constant state throughout the transfer process (i.e., not evaporate or condense). Alternatively, evaporative cooling processes may utilize heat transfer fluids as well.

A heat source may be defined as any space, location, object or body from which it is desirable to transfer, move or remove heat. Examples of heat sources may be spaces (open or enclosed) requiring refrigeration or cooling, such as refrigerator or freezer cases in a supermarket, building spaces requiring air-conditioning, or the passenger compartment of an automobile requiring air-conditioning. A heat sink may be defined as any space, location, object or body capable of absorbing heat. A vapor compression refrigeration system is one example of such a heat sink.

### EXAMPLES

### Reference EXAMPLE 1

### Impact of vapor leakage

A vessel is charged with an initial composition at a temperature of either -25 °C or if specified, at 25 °C, and the initial vapor pressure of the composition is measured. The composition is allowed to leak from the vessel, while the temperature is held constant, until 50 weight percent of the initial composition is removed, at which time the vapor pressure of the composition remaining in the vessel is measured. Results are shown in Table 5.

**TABLE 5**

| Composition wt% | Initial P (Psia) | Initial P (kPa) | After 50% Leak (Psia) | After 50% Leak (kPa) | Delta P (%) |
|---|---|---|---|---|---|
| HFC-1234yf/trans-HFC-1234ze | | | | | |
| 1/99 11.3 78 11.3 78 0.4% | | | | | |
| 10/90 | 12.2 | 84 | 11.8 | 81 | 3.3% |
| 20/80 | 13.1 | 90 | 12.5 | 86 | 4.6% |
| 40/60 | 14.6 | 101 | 14.0 | 96 | 4.3% |
| 60/40 | 15.8 | 109 | 15.4 | 106 | 2.7% |
| 80/20 | 16.9 | 117 | 16.7 | 115 | 1.1% |
| 90/10 | 17.4 | 120 | 17.3 | 119 | 0.5% |
| 99/1 | 17.8 | 123 | 17.8 | 123 | 0.1% |

| trans-HFC-1234ze/HFC-236ea | | | | | |
|---|---|---|---|---|---|
| 99/1 11.2 77 11.2 77 0.0% | | | | | |
| 90/10 | 11.0 | 76 | 11.0 | 76 | 0.4% |
| 80/20 | 10.8 | 75 | 10.6 | 73 | 1.6% |
| 60/40 | 10.2 | 70 | 9.5 | 66 | 6.6% |
| 54/46 | 9.9 | 69 | 9.0 | 62 | 9.5% |
| 53/47 | 9.9 | 68 | 8.9 | 61 | 10.1% |
| | | | | | |

| cis-HFC-1234ze/HFC-236ea (25 °C) | | | | | |
|---|---|---|---|---|---|
| 20.9/79.1 | 30.3 | 209 | 30.3 | 209 | 0.0% |
| 10/90 | 30.2 | 208 | 30.2 | 208 | 0.0% |
| 1/99 | 29.9 | 206 | 29.9 | 206 | 0.0% |
| 40/60 | 30.0 | 207 | 30.0 | 207 | 0.2% |
| 60/40 | 29.2 | 201 | 28.9 | 199 | 0.9% |
| 80/20 | 27.8 | 191 | 27.4 | 189 | 1.4% |
| 90/10 | 26.8 | 185 | 26.5 | 183 | 1.1% |
| 99/1 | 25.9 | 178 | 25.8 | 178 | 0.2% |

| HFC-1234ye/cis-HFC-1234ze (25 °C) | | | | | |
|---|---|---|---|---|---|
| 1/99 | 25.7 | 177 | 25.7 | 177 | 0.0% |
| 10/90 | 25.6 | 176 | 25.6 | 176 | 0.0% |
| 20/80 | 25.3 | 175 | 25.3 | 174 | 0.1% |
| 40/60 | 24.7 | 170 | 24.5 | 169 | 0.5% |
| 60/40 | 23.7 | 163 | 23.5 | 162 | 1.0% |
| 78/22 | 22.4 | 155 | 22.2 | 153 | 1.2% |
| 90/10 | 21.7 | 149 | 21.5 | 148 | 0.9% |
| 99/1 | 20.9 | 144 | 20.8 | 144 | 0.1% |

The difference in vapor pressure between the original composition and the composition remaining after 50 weight percent is removed is less than about 10 percent. This indicates that the compositions would be azeotropic or near-azeotropic.

## Claims

1. A composition comprising HFC-1234ze, at least one further compound selected from the group consisting of: HFC-1234yf, HFC-1234ye and HFC-236ea, and a tracer;
wherein the tracer is selected from the group consisting of hydrofluorocarbons (HFCs), deuterated hydrocarbons, deuterated hydrofluorocarbons, perfluorocarbons, fluoroethers, brominated compounds, iodated compounds, alcohols, aldehydes, ketones, nitrous oxide (N₂O) and combinations thereof, wherein the tracer or tracer blend is present in the composition at a total concentration of up to 1000 parts per million by weight (ppm).

2. The composition of claim 1, wherein HFC-1234ze is cis-HFC-1234ze, trans-HFC-1234ze or a mixture of both, preferably trans-HFC-1234ze.

3. The composition of claim 1 or 2, wherein the at least one further compound is HFC-1234yf.

4. The composition of claim 1, 2 or 3, wherein the tracer is selected from the group consisting of ethane-d6, propane-d8, HFC-32-d2, HFC-134a-d2, HFC-143a-d3, HFC-125-d, HFC-227ea-d, HFC-227ca-d, HFC-134-d2, HFC-236fa-d2, HFC-245cb-d3, HFC-263fb-d2*, HFC-263fb-d3, HFOC-125E, HFOC-134aE, HFOC-143aE, HFOC-227eaE, HFOC-236faE, HFOC-245faEβγ, HFOC-245faEαβ, HFOC-245cbEβγ, HFOC-245cbαβ, HFE-42-11mcc, HFC-23, HFC-161, HFC-152a, HFC-134, HFC-227ea, HFC-227ca, HFC-236cb, HFC-236ea, HFC-236fa, HFC-245cb, HFC-245fa, HFC-254cb, HFC-254eb, HFC-263fb, HFC-272ca, HFC-281ea, HFC-281fa, HFC-329p, HFC-329mmz, HFC-338mf, HFC-338pcc, HFC-347s, HFC-43-10mee, PFC-116, PFC-C216, PFC-218, PFC-C318, PFC-31-10mc, PFC-31-10my, PFC-C51-12mycm, trans-PFC-C51-12mym, cis-PFC-C51-12mym, perfluoromethylcyclopentane, perfluoromethylcyclohexane, ortho-perfluorodimethylcyclohexane, meta-perfluorodimethylcyclohexane, para-perfluorodimethylcyclohexane, perfluoroethylcyclohexane, perfluoroindan, perfluorotrimethylcyclohexane, perfluoroisopropylcyclohexane, cis-perfluorodecalin, trans-perfluorodecalin, cis-perfluoromethyldecalin, trans-perfluoromethyldecalin, bromomethane, bromofluoromethane, bromodifluoromethane, dibromofluoromethane, tribromomethane, bromoethane, bromoethene, 1,2-dibromoethane, 1-bromo-1,2-difluoroethene, iodotrifluoromethane, difluoroiodomethane, fluoroiodomethane, 1,1,2-trifluoro-1-iodoethane, 1,1,2,2-tetrafluoro-1-iodoethane, 1,1,2,2-tetrafluoro-1,2-diiodoethane, iodopentafluorobenzene, ethanol, n-propanol, isopropanol, 2-propanone, n-propanal, n-butanal, 2-butanone and nitrous oxide, preferably wherein the tracer is selected from the group consisting of HFC-23, HFC-161, HFC-152a, HFC-134, HFC-227ea, HFC-227ca, HFC-236cb, HFC-236ea, HFC-236fa, HFC-245cb, HFC-245fa, HFC-254cb, HFC-254eb, HFC-263fb, HFC-272ca, HFC-281ea, HFC-281fa, HFC-329p, HFC-329mmz, HFC-338mf, HFC-338pcc, HFC-347s and HFC-43-10mee, more preferably wherein the tracer is selected from the group consisting of HFC-23, HFC-236ea, HFC-245cb, HFC-245fa, HFC-254eb and HFC-263fb.

5. The composition of claim 1, 2, 3 or 4, wherein the tracer is a hydrofluorocarbon.

6. The composition of any one of claims 1 to 5, wherein the tracer or tracer blend is present in the composition at a total concentration of 50 ppm to 1000 ppm, preferably at a total concentration of 50 ppm to 500 ppm, and more preferably at a total concentration of 100 ppm to 300 ppm.

7. A method of producing cooling, the method comprising: evaporating the composition of any one of claims 1 to 6 in the vicinity of a body to be cooled and thereafter condensing the composition.

8. A method of producing heating, the method comprising: condensing the composition of any one of claims 1 to 6 in the vicinity of a body to be heated and thereafter evaporating the composition.

9. A method for replacing a high GWP refrigerant in a refrigeration, air conditioning, or heat pump apparatus, wherein the high GWP refrigerant is selected from the group consisting of R134a, R22, R123, R11, R245fa, R114, R236fa, R124, R12, R410A, R407C, R417A, R422A, R507A, R502, and R404A, the method comprising providing the composition of any one of claims 1 to 6 to the refrigeration, air conditioning, or heat pump apparatus that uses, used or is designed to use the high GWP refrigerant.

10. A refrigeration, air-conditioning, or heat pump apparatus containing the composition of any one of claims 1 to 6.

## Patentansprüche

1. Zusammensetzung, umfassend HFC-1234ze, mindestens eine weitere Verbindung, die ausgewählt ist aus der Gruppe bestehend aus: HFC-1234yf, HFC-1234ye, HFC-236ea und einem Tracer;
wobei der Tracer ausgewählt ist aus der Gruppe bestehend aus Fluorkohlenwasserstoffen (HFKW), deuterierten Kohlenwasserstoffen, deuterierten Fluorkohlenwasserstoffen, Perfluorkohlenwasserstoffen, Fluorethern, bromierten Verbindungen, iodierten Verbindungen, Alkoholen, Aldehyden, Ketonen Stickstoff(I)-oxid (N₂O) und Kombinationen davon, wobei der Tracer oder das Tracer-Gemisch in der Zusammensetzung in einer Gesamtkonzentration von bis zu 1.000 Gewichtsteilen pro Million (ppm) vorliegen.

2. Zusammensetzung nach Anspruch 1, wobei HFC-1234ze cis-HFC-1234ze, trans-HFC-1234ze oder eine Mischung von beiden, vorzugsweise trans-HFC-1234ze ist.

3. Zusammensetzung nach Anspruch 1 oder 2, wobei die mindestens eine weitere Verbindung HFC-1234yf ist.

4. Zusammensetzung nach Anspruch 1, 2 oder 3, wobei der Tracer ausgewählt ist aus der Gruppe bestehend aus Ethan-d6, Propan-d8, HFC-32-d2, HFC-134a-d2, HFC-143a-d3, HFC-125-d, HFC-227ea-d, HFC-227ca-d, HFC-134-d2, HFC-236fa-d2, HFC-245cb-d3, HFC-263fb-d2 *, HFC-263fb-d3 HFOC-125E, HFOC-134aE, HFOC-143aE, HFOC-227eaE, HFOC-236faE, HFOC-245faEβγ, HFOC-245faEαβ, HFOC-245cbEβγ, HFOC-245cbαβ, HFE-42-11mcc, HFC-23, HFC-161, HFC-152a, HFC-134, HFC-227ea, HFC-227ca, HFC-236cb, HFC-236ea, HFC-236fa, HFC-245cb, HFC-245fa, HFC-254cb, HFC-254eb, HFC-263fb, HFC-272ca, HFC-281ea, HFC-281fa, HFC-329p, HFC-329 mmz, HFC-338mf, HFC-338pcc, HFC-347s, HFC-43-10mee, PFC-116, PFC-C216, PFC-218, PFC-C318, PFC-31-10mc, PFC-31-10my, PFC-C51-12mycm, trans-PFC-C51-12mym, cis-PFC-C51-12mym, Perfluormethylcyclopentan, Perfluormethylcyclohexan, ortho-Perfluordimethylcyclohexan, meta-Perfluordimethylcyclohexan, para-Perfluordimethylcyclohexan, Perfluorethylcyclohexan, Perfluorindan, Perfluortrimethylcyclohexan, Perfluorisopropylcyclohexan, cis-Perfluordodecalin, trans-Perfluordodecalin, cis-Perfluormethyldecalin, trans-Perfluormethyldecalin, Brommethan, Bromfluormethan, Bromdifluormethan, Dibromfluormethan, Tribrommethan, Bromethan, Bromethen, 1,2-Dibromethan, 1-Brom-1,2-difluorethen, Iodtrifluormethan, Difluoriodmethan, Fluoriodmethan, 1,1,2-Trifluor-1-iodethan, 1,1,2,2-Tetrafluor-1-iodethan, 1,1,2,2-Tetrafluor-1,2-diiodethan, Iodpentafluorbenzol, Ethanol, n-Propanol, Isopropanol, 2-Propanon, n-Propanal, n-Butanal, 2-Butanon und Stickstoff(I)-oxid, vorzugsweise wobei der Tracer ausgewählt ist aus der Gruppe bestehend aus HFC-23, HFC-161, HFC-152a, HFC-134, HFC-227ea, HFC-227ca, HFC-236cb, HFC-236ea, HFC-236fa, HFC-245cb, HFC-245fa, HFC-254cb, HFC-254eb, HFC-263fb, HFC-272ca, HFC-281ea, HFC-281fa, HFC-329p, HFC-329mmz, HFC-338mf, HFC-338pcc, HFC-347s und HFC-43-10mee, mehr bevorzugt wobei der Tracer ausgewählt ist aus der Gruppe bestehend aus HFC-23, HFC-236ea, HFC-245cb, HFC-245fa, HFC-254eb und HFC-263fb.

5. Zusammensetzung nach Anspruch 1, 2, 3 oder 4, wobei der Tracer ein Fluorkohlenwasserstoff ist.

6. Zusammensetzung nach einem der Ansprüche 1 bist 5, wobei der Tracer oder das Tracer-Gemisch in der Zusammensetzung in einer Gesamtkonzentration von 50 ppm bis 1.000 ppm, bevorzugt in einer Gesamtkonzentration von 50 ppm bis 500 ppm und mehr bevorzugt in einer Gesamtkonzentration von 100 ppm bis 300 ppm vorliegt.

7. Verfahren zum Erzeugen von Kühlung, wobei das Verfahren umfasst: Verdampfen der Zusammensetzung nach einem der Ansprüche 1 bis 6 in der Nähe eines zu kühlenden Körpers und anschließendes Kondensieren der Zusammensetzung.

8. Verfahren zum Erzeugen von Erwärmung, wobei das Verfahren umfasst: Kondensieren der Zusammensetzung nach einem der Ansprüche 1 bis 6 in der Nähe eines zu erwärmenden Körpers und anschließendes Verdampfen der Zusammensetzung.

9. Verfahren zum Ersetzen eines Kältemittels mit hohem Treibhauspotential (GWP) in einer Kälte-, Klima- oder Wärmepumpenvorrichtung, wobei das Kältemittel mit hohem GWP ausgewählt ist aus der Gruppe bestehend aus R134a, R22, R123, R11, R245fa, R114, R236fa, R124, R12, R410A, R407C, R417A, R422A, R507A, R502 und R404A, wobei das Verfahren das Bereitstellen der Zusammensetzung nach einem der Ansprüche 1 bis 6 für die Kälte-, Klima- oder Wärmepumpenvorrichtung umfasst, die das Kältemittel mit hohem GWP verwendet, verwendet hat oder darauf ausgelegt ist, es zu verwenden.

10. Kälte-, Klima- oder Wärmepumpenvorrichtung, enthaltend die Zusammensetzung nach einem der Ansprüche 1 bis 6.

## Revendications

1. Composition comprenant du HFC-1234ze, au moins un composé supplémentaire sélectionné dans le groupe constitué par: HFC-1234yf, HFC-1234ye et HFC-236ea, et un traceur;
dans laquelle le traceur est sélectionné dans le groupe constitué des hydrocarbures fluorés (HFC), des hydrocarbures deutériés, des hydrocarbures fluorés deutériés, des hydrocarbures perfluorés, des éthers fluorés, des composés bromés, des composés iodés, des alcools, des aldéhydes, des cétones, de l'oxyde nitreux (N₂O) et de leurs combinaisons, le traceur ou le mélange de traceurs étant présent dans la composition sous une concentration totale allant jusqu'à 1 000 parties par million en poids (ppm).

2. Composition selon la revendication 1, dans laquelle le HFC-1234ze est le *cis-*HFC-1234ze, le *trans-*HFC-1234ze ou un mélange des deux, préférablement le *trans-*HFC-1234ze.

3. Composition selon la revendication 1 ou 2, dans laquelle ledit au moins un composé supplémentaire est le HFC-1234yf.

4. Composition selon la revendication 1, 2 ou 3, dans laquelle le traceur est sélectionné dans le groupe constitué de l'éthane-d6, du propane-d8, HFC-32-d2, HFC-134a-d2, HFC-143a-d3, HFC-125-d, HFC-227ea-d, HFC-227ca-d, HFC-134-d2, HFC-236fa-d2, HFC-245cb-d3, HFC-263fb-d2*, HFC-263fb-d3, HFOC-125E, HFOC-134aE, HFOC-143aE, HFOC-227eaE, HFOC-236faE, HFOC-245faEβγ, HFOC-245faEαβ, HFOC-245cbEβγ, HFOC-245cbαβ, HFE-42-11mcc, HFC-23, HFC-161, HFC-152a, HFC-134, HFC-227ea, HFC-227ca, HFC-236cb, HFC-236ea, HFC-236fa, HFC-245cb, HFC-245fa, HFC-254cb, HFC-254eb, HFC-263fb, HFC-272ca, HFC-281ea, HFC-281fa, HFC-329p, HFC-329mmz, HFC-338mf, HFC-338pcc, HFC-347s, HFC-43-10mee, PFC-116, PFC-C216, PFC-218, PFC-C318, PFC-31-10mc, PFC-31-10my, PFC-C51-12mycm, *trans-*PFC-C51-12mym, du *cis*-PFC-C51-12mym, perfluorométhylcyclopentane, perfluorométhylcyclohexane, *ortho*-perfluorodiméthylcyclohexane, *méta-*perfluorodiméthylcyclohexane, *para*-perfluorodiméthylcyclohexane, perfluoroéthylcyclohexane, perfluoroindane, perfluorotriméthylcyclohexane, perfluoroisopropylcyclohexane, *cis*-perfluorodécaline, *trans*-perfluorodécaline, *cis-*perfluorométhyldécaline, *trans*-perfluorométhyldécaline, bromométhane, bromofluorométhane, bromodifluorométhane, dibromofluorométhane, tribromométhane, bromoéthane, bromoéthène, 1,2-dibromoéthane, 1-bromo-1,2-difluoroéthène, iodotrifluorométhane, difluoroiodométhane, fluoroiodométhane, 1,1,2-trifluoro-1-iodoéthane, 1,1,2,2-tétrafluoro-1-iodoéthane, 1,1,2,2-tétrafluoro-1,2-diiodoéthane, iodopentafluorobenzène, éthanol, *n*-propanol, isopropanol, 2-propanone, *n*-propanal, *n-*butanal, de la 2-butanone et de l'oxyde nitreux, préférablement dans laquelle le traceur est sélectionné dans le groupe constitué du HFC-23, HFC-161, HFC-152a, HFC-134, HFC-227ea, HFC-227ca, HFC-236cb, HFC-236ea, HFC-236fa, HFC-245cb, HFC-245fa, HFC-254cb, HFC-254eb, HFC-263fb, HFC-272ca, HFC-281ea, HFC-281fa, HFC-329p, HFC-329mmz, HFC-338mf, HFC-338pcc, HFC-347s et HFC-43-10mee, plus préférablement le traceur étant sélectionné dans le groupe constitué du HFC-23, HFC-236ea, HFC-245cb, HFC-245fa, HFC-254eb et HFC-263fb.

5. Composition selon la revendication 1, 2, 3 ou 4, dans laquelle le traceur est un hydrocarbure fluoré.

6. Composition selon l'une quelconque des revendications 1 à 5, dans laquelle le traceur ou le mélange de traceurs est présent dans la composition sous une concentration totale de 50 ppm à 1 000 ppm, préférablement sous une concentration totale de 50 ppm à 500 ppm, et plus préférablement sous une concentration totale de 100 ppm à 300 ppm.

7. Procédé pour produire un refroidissement, le procédé comprenant: l'évaporation de la composition selon l'une quelconque des revendications 1 à 6 à proximité d'un corps à refroidir et par la suite la condensation de la composition.

8. Procédé pour produire de la chaleur, le procédé comprenant: la condensation de la composition selon l'une quelconque des revendications 1 à 6 à proximité d'un corps à chauffer et par la suite l'évaporation de la composition.

9. Procédé pour remplacer une substance réfrigérante à potentiel PRP élevé dans un appareil de réfrigération, de conditionnement d'air, ou de pompe à chaleur, la substance réfrigérante à potentiel PRP élevé étant sélectionnée dans le groupe constitué de R134a, R22, R123, R11, R245fa, R114, R236fa, R124, R12, R410A, R407C, R417A, R422A, R507A, R502, et R404A, le procédé comprenant la fourniture de la composition selon l'une quelconque des revendications 1 à 6 audit appareil de réfrigération, de conditionnement d'air, ou de pompe à chaleur qui utilise, a utilisé ou est conçu pour utiliser la substance réfrigérante à potentiel PRP élevé.

10. Appareil de réfrigération, de conditionnement d'air, ou de pompe à chaleur contenant la composition selon l'une quelconque des revendications 1 à 6.
